# EUROPEAN PATENT SPECIFICATION

(11) **EP 1 649 747 B1**
(45) Date of publication and mention of the grant of the patent: **21.06.2017**
(21) Application number: 05022812.1
(22) Date of filing: 19.10.2005
(51) Int. Cl.: A01M 1/20, A01M 1/02, A01M 1/04, A61L 9/12

(54) **A device for dispensing a substance to insects or mites**
Vorrichtung zur Abgabe eines Wirkstoff für Insekten oder Milben
Dispositif pour délivrer une substance pour les insectes ou les mites

(30) Priority: 20.10.2004 IL 16472804
(43) Date of publication of application: 26.04.2006
(73) Proprietor: Israely, Nimrod, 71930 D.N. Modi'in (IL)
(72) Inventor: Israely, Nimrod, D.N. Modi'in 71930 (IL); Oren, Itay, D.N. Modi'in 71930 (IL)
(74) Representative: Becker Kurig Straus

(56) References cited:
- WO-A-94/09624
- US-A- 1 129 772
- US-A- 3 727 840
- US-A- 5 263 274
- US-A- 5 810 253
- US-B1- 6 708 445

## Description

### FIELD OF THE INVENTION

This invention relates to a device for dispensing substances to insects or mites, see e.g. WO 94/09624 A.

### BACKGROUND OF THE INVENTION

Despite the progress in new compounds and compositions aimed for controlling flying insects, the mode of delivering the active material has remained much the same over time. The prevailing method for controlling the insecticides, despite its drawback, is by spraying the area with the most effective formulation. Part of the hazardous nature of pesticides in general emerges from this ineffective route for their application. Another problem associated with their use stems from the fact that the entire vegetation, i.e. the fruit, vegetable, branches and leaves, and its vicinity (ground, and air) is coated with the active insecticide, as well as the draft.

Traps among other means (repellents, electric killing etc.) are an alternative approach to spraying the entire area to be protected in order to control flying insects. The insects are attracted to the traps by attractants which may be chemical, food or sex attractants or by physical means such as color and shape. Color may also be an attractant as disclosed in IL 103,629 where a yellow panel and a red sphere were found to be effective for attracting flies. After being attracted, the flies are eliminated either by physically being trapped within the trap, or by initially covering the trap's panel with glue, thus the attracted flies are stuck after their approach and die due to lack of food. Apart from a rather limited efficiency, traps are associated with drawbacks. In the case of physically trapping the insects, the insects are indeed attracted to the near vicinity of the trap, however, very frequently do not find their way into the trap. If the entrance is made easy enough for the approaching insects, then their way out is also facilitated. In case the insects are stuck in the glue, the efficiency is greatly reduced due to the fact that the glue is very non-selective. In the latter case, dust, leaves and other non-target insects adhere to the trap in addition to the desired insects. Furthermore, the trap has a very limited range due to the fact that once it is covered with desired or non desired substance it is no longer useful.

Alternatively, the trap may be covered with a poisonous material and the insects are exterminated as a result of contact or consumption of an insecticide. US 5,359,808 discloses such a trap consisting of a bag soaked prior to its use with insecticide where the approaching flying insects are exterminated upon contact with the bag. The attractants are immersed in water, the water serving as a source of humidity thereby being themselves an additional attractant. The use of such a trap is restricted to hot periods. Furthermore, the humidity has to be replenished in order to stay effective for long periods. IL 129634 (corresponding to US 6,708,445) discloses yet another trap. The trap is a planer device having a pocket for storing a viscous composition poisonous to insects containing attractants. Upon contact of the trap with humidity, the outer part of the viscous composition is dissolved and spreads on the trap, attracting insects and killing them upon digestion of the poisonous composition. However, humidity controlled release of the viscous composition is not uniform and the variance in the amount of available poisonous composition on the entire trap leads to variance in its efficacy.

### SUMMARY OF THE INVENTION

The present invention is based on a new design of a device according to claim 1 for dispensing substances to invertebrates, particularly insects or mites. The new device enables in particular dispensing of such substances in a controlled manner. The substances may be insecticides for combating pest insects, or may be nutritional and/or therapeutic, for supporting growth and well being of farmed insects, such as in particular in the case of honey bees. The controlled dispensing according to the invention is independent of environmental effects.

The invention provides a device for dispensing a substance for invertebrates, the device comprising a container holding a liquid formulation comprising said substance and a liquid-retaining substrate, the container having a dispensing opening that can discharge the formulation in a controlled manner onto said substrate.

The invention is thus directed to a device for dispensing a liquid formulation that comprises the substance in a controlled manner, from a container onto a substrate. The substrate receives and accommodates the discharged formulation and thus the insect can come into contact therewith. Where the substance is an insecticide, such contact will lead to eventual extermination of the insect (which may be immediate or delayed). According to the invention, the formulation comprises a substance to lure the insects, which may be a nutritional substance such as sugar or a protein hydrolisate, a parapheromone, or a pheromone. The substance may also be a nutritional substance intended for feeding farmed insects, such a s honey bees, for example at times when their natural food is scarce. Another example of a substance is an antibiotic for controlling or combating infections of farmed insects. Another example of a substance is for feeding natural native beneficial insects (such as ladybugs or *Anisochryza* (*Chrysoperla*) *carnea*) in times of lack of feeding sources, and by doing so supporting the existence of the local population. Another example of a substance is for attracting-feeding-and-controlling ant population in the field.

By one embodiment but not according to the invention, the opening is not in physical contact with the substrate and the discharge of the formulation is by gravitation from the opening onto the substrate, e.g. by dripping out of the opening. According to the invention, the container is fitted such so that the opening is in physical contact with the substrate. According to the invention, said substrate comprises a porous material. The porous material may be any material enabling the diffusion of the discharged liquid such as a synthetic e.g. polymeric or non synthetic fabric e.g. cloth, textile. Such a substrate becomes substantially soaked with the formulation and is maintained so by the continuing controlled release of the formulation from the nozzle. In accordance with another said substrate comprises a basin, e.g. in the form of a shallow dish. The former embodiment is particularly suitable for the case where said opening is in direct contact with said substrate; the latter one, for the case where the discharge of said formulation is gravitational.

By one embodiment, the device is adapted for hanging to trees or bushes or onto support structures and is equipped with appropriate hanging means. In accordance with another embodiment, the device comprises a support structure for attaching to vegetation, for fitting onto the ground, etc. An example for such a support structure is one that includes a pole with a sharpened ending for inserting into the ground.

In accordance with an embodiment of the invention, the container is fitted at an upper part of the device. Typically, in accordance with this embodiment includes a pocket at an upper part thereof that houses said container. The pocket may be formed from flexible sheets, e.g. sheets of said porous material that are detached at some portions from the surface of the device to define said pockets.

By one embodiment, said substance is a pesticide. By another embodiment, said substance is a nutritional or a health additive (e.g. an antibiotic) for supporting farmed invertebrates, e.g. honey bees. The formulation comprises substances that have nutritional values, such as sugar, protein hydrolisate, or a pheromone.

In order to improve the luring efficiency of the device, it may be colored with colors having an insect attractant property, for example yellow in the case of fruit flies. Possibly, also, the device may be colored with a pattern of two or more colors, for example in a combination of yellow and red.

### BRIEF DESCRIPTION OF THE DRAWINGS

In order to understand the invention and to see how it may be carried out in practice, a preferred embodiment will now be described, by way of nonlimiting example only, with reference to the accompanying drawings, in which:
**Fig. 1** is an elevation view of a preferred embodiment of a device according to the present invention where the container is situated within a pocket being part of the device.
**Fig. 2** is an elevation view of another embodiment of a device but not according to the present invention where the container is fastened to the upper part of the device.
**Fig. 3** is an elevation view of another preferred embodiment of a device according to the present invention where the device further comprises a two-colored pattern for attracting flying insects.
**Fig. 4** is an elevation view of another embodiment of a device but not according to the present invention where the container is situated above a porous material.
**Fig. 5** is an elevation view of another embodiment of a device but not according to the present invention where the container is situated above a non-porous material.

### DETAILED DESCRIPTION OF THE INVENTION

The invention shall now be illustrated with reference to some non limiting specific embodiments which are depicted in the annexed drawings. As will be appreciated, a large number of modifications of the depicted devices may be made, within the scope of the invention as defined by the appended claims. For example, the illustrated geometric shapes are but an example and the device may have various different other shapes.

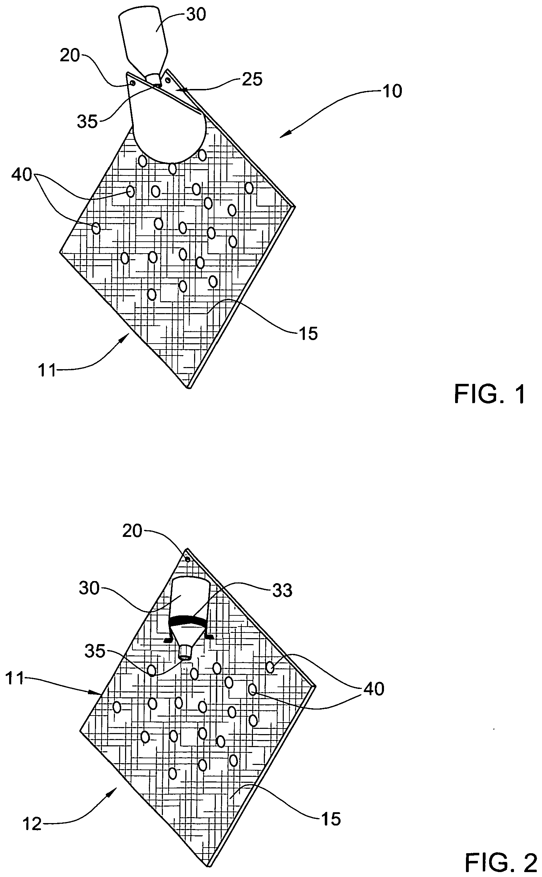

Turning first to **Fig. 1**, there is shown a device **10** for dispensing a substance for invertebrates, such as insects or mites. As already explained above, depending on the intended use, the substance may be a pesticide, a substance with nutritional values such as sugar or a protein hydrolizate, a pheromone, an antibiotic, etc.

The device includes a matrix **11** which in this specific embodiment has a rhomboid shape. However, as will be appreciated the matrix may have a variety of different polygonal shapes or may also be round or oval. Regarding dimensions, typically each of the sides of the matrix **11** are in the range of 20-40 cm. Matrix **11** is made of substantially porous material **15**. The upper portion of the device has a pocket **25** which is appropriately shaped so as to accommodate a container **30**. At the upper part of pocket **25** are two holes **20** for hanging the device.

Container **30** holds a liquid substance to be discharged, and has an opening **35** with a nozzle (not shown). Prior to inserting container **30** into pocket **25**, the nozzle is open to permit control discharge of the liquid formulation within the container which includes the substance. Through capillary and/or gravitational forces the liquid formulation with said substance scatters throughout matrix **11**, as represented by a plurality of droplets **40** in Fig. 1.

In the following description of the additional embodiments, like reference numerals will be used to indicate like components. The reader may need to occasionally refer to the description of **Fig. 1** for a full explanation of such components.

**Fig. 2** shows a device **12** of a different embodiment in which container **30** is held by a holder **33** at the upper portion of the device. Holder **33** may, according to some embodiments, be oriented so that the bottle will be slightly slanted so that the opening **35** will face a portion of matrix **11**. In operation, liquid formulation which is contained in container **30** will gradually drip thus soaking the porous material **15** with the formulation and leading to a scattering of substance **40** throughout the matrix.

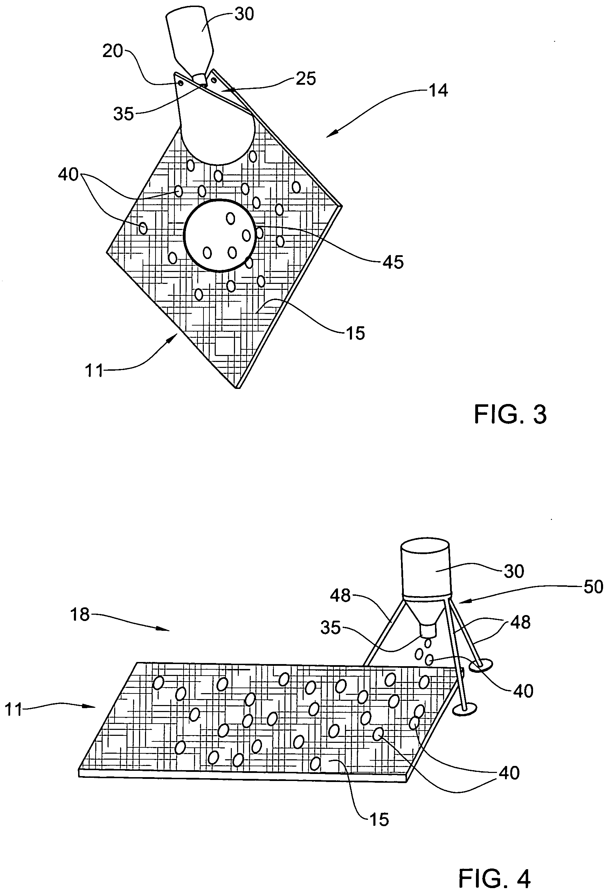

**Fig. 3** shows another embodiment **14** which is very similar to that of **Fig. 1**, the difference being that rather than having a single colored matrix, the matrix has a colored pattern consisting, in this embodiment, from a central portion **45** of one color and the periphery of another color. Exemplary colors are red for the central portion **45** and yellow for the remaining portion of the device. Such a colored pattern is particularly suitable for trapping fruit flies.

**Fig. 4** shows another embodiment in which the device **18** has two distinct components: the matrix **11** and a container unit **50.** Container unit **50** consists of container **30** and a support structure **48**. The support structure is placed such that opening **35** will drip-dash discharge its contents gradually on to a portion of the matrix thus causing the matrix to be gradually soaked with the liquid formulation thus scattering the substance throughout the matrix **11**. The matrix **11** according to this embodiment may be positioned horizontally, e.g. placed on the ground, may be elevated, may be positioned in a slanted position, etc.

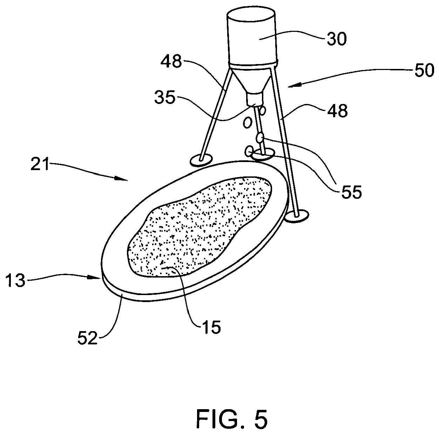

Reference is now being made to **Fig. 5** showing a device **21**, which consists of two components, a container component **50** and a substrate **13** which has a slightly elevated rim **52** so as to be able to hold a liquid. Container component **50** is situated so that liquid formulation drops **55** which are discharged out of opening **35** will accumulate there.

As mentioned the present invention is directed to a device for controlled dispensing a substance for insects or mites. The device comprises a container and a substrate. The substance to be discharged is a liquid formulation stored in a container equipped with an opening that has a suitable mechanism which enables the discharging of a predetermined amount of substance at a predetermined rate onto the substrate. Such mechanisms are generally known *per se.* The substrate may be a substantially porous material or a non-porous material serving as a receptacle for the discharged material. In case the substrate is a substantially porous material, the discharged substance spreads to a large area of the substantially porous material or even to the entire area by capillary and/or gravity forces. Parameters governing the amount of substance discharged from the container (other than the suitable mechanism) and which is adsorbed by the substantially porous material are the viscosity of the discharged substance and the density of the porosity of the substrate. The mechanism at the nozzle governing the rate of discharging of the liquid material may be any mechanical, electrical, electromechanical or any other mechanism enabling the discharge of a predetermined volume of the stored liquid in a predetermined time. The diameter of the hole in the container and the existence or absence of an additional opening for allowing entry of air into the container also contribute to the rate of discharging and should also be taken into account. In case the discharged substance falls on a porous material, any substance discharged from the container spreads on the surface of the porous device by capillary and/or gravity forces resulting in that the surface of the device is filled with the discharged substance. Any amount of discharged substance beyond the capacity of the porous material simply drips from the porous material. The substantially porous material may be made of any synthetic or natural material as long as it is a porous material that allows the propagation and spreading of the released substance from the container. Non limiting examples of such porous material are synthetic and non synthetic fabric, e.g. cotton, paper, fibrous material or porous polymeric substance.

The device may be a one-unit device, such as that illustrated in **Fig. 1** and **Fig. 2** where the container carrying the liquid substance to be discharged and the substantially porous material are integrated together. In such a one-unit device, the container may be inserted into a pocket situated at the upper part, as in **Fig. 1** or may be fastened to the upper part by any fastening means, as in **Fig. 2****.** Non limiting examples of fastening means are a hook, band, hook and pile (Velcro®) mechanism or pins.

Alternatively, the device may be a two-unit device, where the container carrying the substance to be discharged onto the substrate is part of a separate unit from the substrate, i.e. there is no physical contact between the nozzle and the substrate. Such a two-unit device is shown in **Figs. 4** and **5**. In such a device, the substrate which may be a porous or a non-porous material, may be placed on the surface of the desired location (plantation or any other appropriate location) and the container is suspended above at a distance from the substrate by any possible manner. The container may be suspended from a pole, a tree, wall, ceiling etc. Alternatively, it may be supported on a support structure as depicted in **Figs. 4** and **5**.

In order to attract insects or mites to approach the device, the device may be colored in a specific color known to attract such insects or mites. It may further possess an additional colored section within the substrate's area such that the contrast in colors may aid in attraction. In the latter case of contrast, the additional colored section may be of a specific shape, e.g. square, rectangular or rounded. It should be mentioned that a yellow/red combination is known in the art to attract flying insects, in particular fruit flies. The substance to be discharged from the container generally should contain an active component such as a poisonous composition or a nutritional/therapeutical composition together with a chemically attracting substance which aids in bringing the insects or vertebrates to the vicinity of the device.

The device may be used for any operation involving feeding insects or mites with the discharged substances. In one aspect the device of the present invention may be used for controlling insects or mites, in particular, flying insects, by poisoning them. The discharged substance in such a case comprises at least one insecticide where upon ingestion or contact, the pest is exterminated. Alternatively, the device may be used as a feeding station for desirous insects or mites which have a beneficial effect on the plantation such as bees, lady bugs, predatory mites and wasps. In such a case the substance to be discharged from the container has nutritional value or therapeutic value for the insects or vertebrates.

The benefit of using a container for storing the substance to be released is that the composition is protected from environmental effects as long as it is stored within the container. Sensitive components are thus saved from oxidation, degradation, evaporation, or reaction with air. Another benefit of the use of a container is the versatility of the device and the possibility of adjusting the rate of release to the different seasons and different ripening in the plantation attracting different population of insects. It should be understood that the container may be replaced once all of its contents were released or it may be refilled. The device may be used for consequent uses and even for different uses depending on the nature of the contents of the substance in the container. Changing the function of the device from an insect controlling device to a feeding and/or therapeutic station merely requires rinsing thoroughly the substrate and the container in order to eliminate all residues of prior material. Alternatively, only the substrate is thoroughly rinsed and the container is replaced.

## Claims

1. A device (10) for dispensing a substance for insects or mites, the device comprising a container (30) holding a liquid formulation comprising said substance and a substrate (11) made of a porous material, the container having a dispensing nozzle,
wherein said formulation also comprises a nutritional substance, parapheromone or pheromone to lure the insects;
said container comprises an additional opening for allowing entry of air into the container;
said nozzle being in physical contact with the substrate (11) and enables the discharging of a predetermined amount of the substance at a predetermined rate in a continuing controlled release directly onto said substrate (11), and
said substrate (11) being a liquid-retaining substrate for receiving and accommodating the dispensed substance for insects coming into contact therewith.

2. A device according to claim 1, equipped with hanging means (20).

3. A device according to claim 1, comprising a support structure.

4. A device according to claim 1, comprising a pocket (25) at the upper part thereof housing the container (30).

5. A device according to claim 1, wherein said container (30) is fitted at the upper part of said device (10).

6. A device according to any one of claims 1 to 5, wherein said substance is pesticide.

7. A device according to any one of claims 1 to 5, wherein said substance is an insect nutritional or therapeutic substance.

8. A device according to any one of claims 1 to 7, being colored with an insect attracting color.

9. A device according to claim 8, being colored with a color pattern such that at least one portion thereof has a different color than the rest of the device.

## Patentansprüche

1. Einrichtung (10) zum Dosieren einer Substanz gegen Insekten oder Milben, worin die Einrichtung einen Behälter (30) mit einer flüssigen Formulierung umfasst, die die Substanz und ein Substrat (11) aus einem porösen Material enthält, worin der Behälter eine Dosierdüse aufweist,
worin die Formulierung weiter einen Nährstoff, ein Parapheromon oder Pheromon umfasst, um die Insekten anzulocken;
worin der Behälter eine weitere Öffnung umfasst, um einen Eintritt von Luft in den Behälter zu ermöglichen;
worin die Düse in körperlichem Kontakt mit dem Substrat (11) steht und eine Entleerung einer bestimmten Menge der Substanz in einer bestimmten Rate in einer anhaltend gesteuerten Freisetzung direkt auf das Substrat (11) ermöglicht, und
worin das Substrat (11) ein Flüssigkeits-zurilckhaltendes Substrat ist, um die dosierte Formulierung zu erhalten und aufzunehmen, so dass Insekten damit in Kontakt kommen.

2. Einrichtung nach Anspruch 1, welche mit Aufhängemittel (20) ausgestattet ist.

3. Einrichtung nach Anspruch 1, welche einen Trägeraufbau umfasst.

4. Einrichtung nach Anspruch 1, welche eine Tasche (25) am oberen Ende davon umfasst, die den Behälter (30) aufnimmt.

5. Einrichtung nach Anspruch 1, worin der Behälter (30) am oberen Teil der Einrichtung (10) vorgesehen ist.

6. Einrichtung nach einem der Ansprüche 1 bis 5, worin die Substanz ein Pestizid ist.

7. Einrichtung nach einem der Ansprüche 1 bis 5, worin die Substanz ein Nährstoff oder eine therapeutische Substanz für Insekten ist.

8. Einrichtung nach einem der Ansprüche 1 bis 7, welche mit einer Insekten-Anlockfarbe gefärbt ist.

9. Einrichtung nach Anspruch 8, welche mit einem Farbmuster gefärbt ist, so dass mindestens ein Teil davon eine unterschiedliche Farbe aufweist als der Rest der Einrichtung.

## Revendications

1. Dispositif (10) pour distribuer une substance pour des insectes ou des mites, le dispositif comprenant un récipient (30), contenant une formulation liquide comprenant ladite substance, et un substrat (11) en matériau poreux, le récipient présentant une buse de distribution,
ladite formulation comprenant également une substance nutritionnelle, une paraphéromone ou une phéromone pour attirer les insectes ;
ledit récipient présentant une ouverture supplémentaire permettant l'entrée d'air dans le récipient ;
ladite buse étant en contact physique avec le substrat (11) et permettant l'évacuation d'une quantité prédéterminée de la substance à une vitesse prédéterminée dans une libération régulée continue, directement sur ledit substrat (11) et
ledit substrat (11) étant un substrat retenant les liquides, destiné à recevoir et à loger la substance distribuée pour des insectes venant en contact avec celle-ci.

2. Dispositif selon la revendication 1, pourvu de moyens de suspension (20).

3. Dispositif selon la revendication 1, comprenant une structure de support.

4. Dispositif selon la revendication 1, comprenant une poche (25) au niveau de sa partie supérieure logeant le récipient (30).

5. Dispositif selon la revendication 1, ledit récipient (30) étant placé au niveau de la partie supérieure dudit dispositif (10).

6. Dispositif selon l'une quelconque des revendications 1 à 5, ladite substance étant un pesticide.

7. Dispositif selon l'une quelconque des revendications 1 à 5, ladite substance étant une substance nutritive ou thérapeutique pour insectes.

8. Dispositif selon l'une quelconque des revendications 1 à 7, étant coloré avec une couleur attirant les insectes.

9. Dispositif selon la revendication 8, étant coloré avec un motif coloré de sorte qu'au moins une partie de celui-ci possède une couleur différente de celle du reste du dispositif.
